# EUROPEAN PATENT SPECIFICATION

(11) **EP 0 717 840 B1**
(45) Date of publication and mention of the grant of the patent: **04.11.1998**
(21) Application number: 94922997.5
(22) Date of filing: 03.08.1994
(51) Int. Cl.: G01N 21/76

(54) **Bio-Luminescence Monitoring Method**
Verfahren zur Kontrolle von Biolumineszenz
Procede de Controle de la Bioluminescence

(30) Priority: 07.09.1993 GB 9318495
(43) Date of publication of application: 26.06.1996
(73) Proprietor: BIOTRACE LTD., Bridgend, Mid Glarmorgan CF31 3NA (GB)
(72) Inventor: JOHNSON, Ian, Roy, St.Bridges Major, Mid Glamorgan CF31 0SL (GB); GOODFIELD, Clive, Pontypridd Mid Glarmorgan CF37 1EN (GB)
(74) Representative: Gibson, Stewart Harry
(86) International application number: GB9401706
(87) International publication number: WO9507457

(56) References cited:
- EP-A- 0 122 028
- WO-A-90/04775
- DE-A- 2 804 117
- DE-A- 3 540 823
- GB-A- 2 218 803
- US-A- 5 086 233
- PATENT ABSTRACTS OF JAPAN vol. 5, no. 32 (P-50) (704) 27 February 1981 & JP,A,55 154 440 (AROKA K.K.) 2 December 1980

## Description

This invention relates to a method for monitoring bio-luminescent light emission, particularly but not solely for use in hygiene monitoring.

It is known to test for micro-organisms or other cellular material by taking a sample and releasing adenosine triphosphate (ATP) contained within the cells using an appropriate reagent together with the enzyme luciferase in order to cause the emission of light. The light output is related to the concentration of ATP in the sample and hence the contamination present.

Hitherto, a typical testing procedure has involved wiping a pre-moistened swab over a surface to be tested, contacting the swab with a breakage reagent to transfer bacteria or cells from the swab to that reagent and thereby releasing cellular ATP, then transferring the extract to a cuvette containing a liquid of the enzyme luciferase, such that light is now emitted from the liquid in the cuvette. The cuvette is now placed into a light-tight chamber of a monitoring instrument, or luminometer, which measures the light output over a predetermined period of time (typically 10 seconds): this measured light is a measure of the quantity of cells picked up on the swab. The procedure depends upon transferring cells from the surface to the swab and then to the breakage reagent, but in practice this is inefficient because only a proportion of the cells will be transferred.

In accordance with this invention, there is provided a method of testing for the presence of cellular material by means of bioluminescent light emission, comprising wiping a swab, pre-moistened with breakage reagent, over a surface to be tested, contacting said swab with enzyme solution such that if the swab sample has picked up cells, light is now emitted, then measuring the light output directly from the swab.

This method avoids inaccuracies associated with transfer and dilution losses of hitherto known methods using ATP extraction.

The swab is moistened with breakage reagent before it is wiped over the surface to be tested. Preferably a number of swabs are pre-moistened in this manner, then enclosed in protective tubes until required for use. After wiping over the surface to be tested, preferably the swab is dipped into the enzyme solution for a pre-determined time period (e.g. 60 seconds), then returned to its protective tube. This tube is preferably transparent so that it can then be introduced into the monitor to measure the light now being emitted from the swab owing to the release of ATP from the cells picked up on the swab from the surface being tested. We have found that polyethylene often emits a low level of light, by autofluorescence: we have found that polypropylene does not exhibit autofluorescence and is therefore a suitable material for the protective tubes for the swabs used in this method.

For measuring the light output from the swab, a monitoring instrument (luminometer) may be used which comprises a casing having a section which can be pivoted between one position generally flush with a top face of said casing and a second position which is generally vertical, said section including an elongate sample chamber to receive a sample, the instrument further including a light detector arrangement for sensing light emitted from a sample in said chamber and providing a measure of the light emitted in a predetermined time period.

This instrument is able to receive an elongate sample for measurement of its light output: for this purpose the pivoted section is moved to its generally vertical position. However, when not required for use, this pivoted section can be pivoted to its position generally flush with the top face of the instrument casing.

The luminometer is thus able to receive a swab when returned to its protective tube, or sample tube. Preferably a light tight cap is provided for the open top end of the elongate sample chamber, and this cap is slidable into a position in which it detents: in being slid into this position, the cap bears on the top of the sample tube within the sample chamber, to depress the sample tube and correspondingly displace a member on which the sample tube rests; this member now bears against a shutter to pivot the latter from an opening to the light detector.

Embodiments of this invention will now be described by way of example only and with reference to the accompany drawings in which:
FIGURE 1 is a perspective view of a monitoring instrument or luminometer in accordance with this invention, shown with its sample chamber section pivoted to a closed position;
FIGURE 2 is a similar view of the instrument, shown with its sample chamber section pivoted to an in-use position;
FIGURE 3 is an enlarged vertical section across the instrument adjacent its rear edge;
FIGURE 4 is a section on the line IV-IV of Figure 3; and
FIGURE 5 shows a swab, swab protective tube and an enzyme containing tube used with the luminometer in a kit.

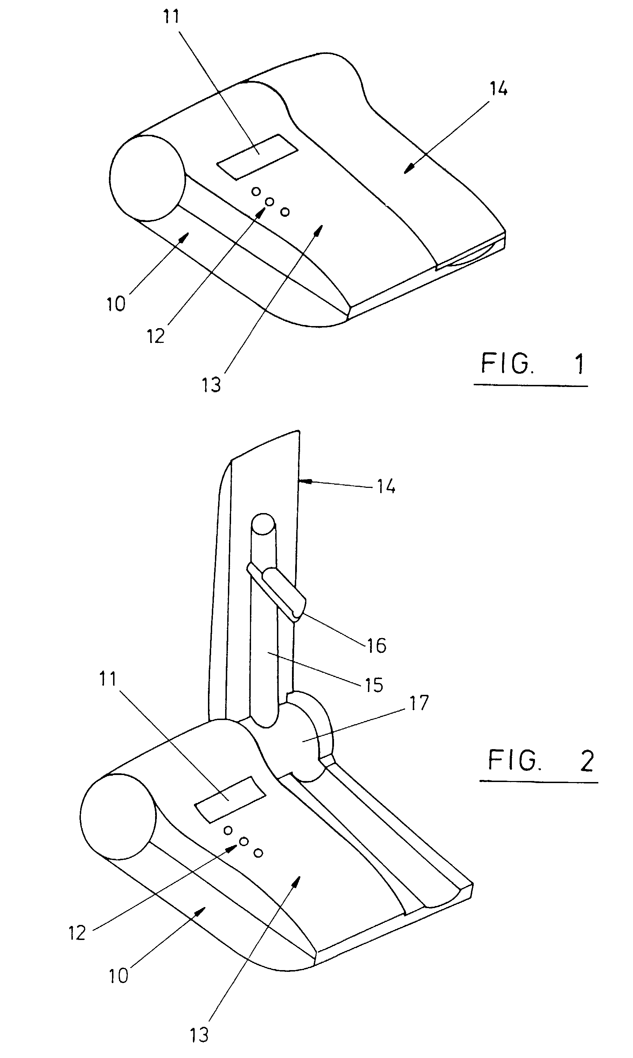

Referring to Figures 1 and 2, there is shown a luminometer the housing or casing 10 of which is of generally rectangular, flat form arranged for the monitor to rest flat on a table, bench or the like. The top face of the casing 10 has a window 11 through which a numerical display is presented, a number of translucent windows 12 through which indicator lights (LED's) are visible when energised, and a touch-sensitive panel 13 to operate a "start" switch of the instrument. The luminometer further comprises an elongate section 14 extending from front-to-rear of the casing 10 along its right hand side, this elongate section 14 being pivoted to the casing at the rear of the latter. Normally the section 14 is in a closed position in which it lies flush with the top surface of the casing, as shown in Figure 1, but the section 14 can be pivoted to an upright position as shown in Figure 2.

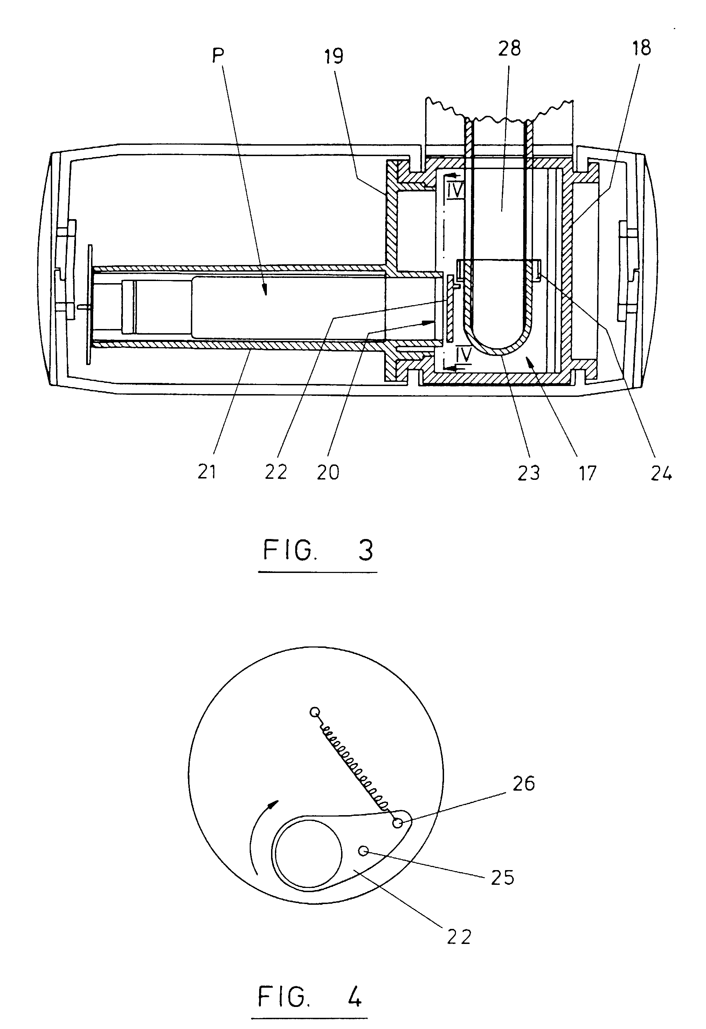

The pivoted section 14 is formed on its underside with an elongate, tubular chamber 15 which has an open top normally closed by a light-tight cap 16. At its bottom end, the tubular chamber 15 merges into a larger-diameter cylinder 17 which is mounted for pivoting about its axis, to provide the pivotal movement of the section 14. As shown in Figure 3, the opposite ends of cylinder 17 are journalled in fixed annular flanges of the casing 10: one end 18 of the cylinder 17 is closed, whilst its other end is open but journalled to a fixed circular wall 19 having an integral tube 21 which extends across the width of the casing 10 adjacent its rear edge and bottom wall: the tube 21 houses a photomultiplier P the sensor face of which lies just behind an end 20 of tube 21 which projects into the cylinder 17. A shutter 22 is pivoted to the fixed wall 19 and normally lies across the end 20 of tube 21 to prevent light reaching the photomultiplier P. Alternative forms of light detector may be used instead of the photomultiplier, e.g. an avalanche photodiode or junction light detecting device.

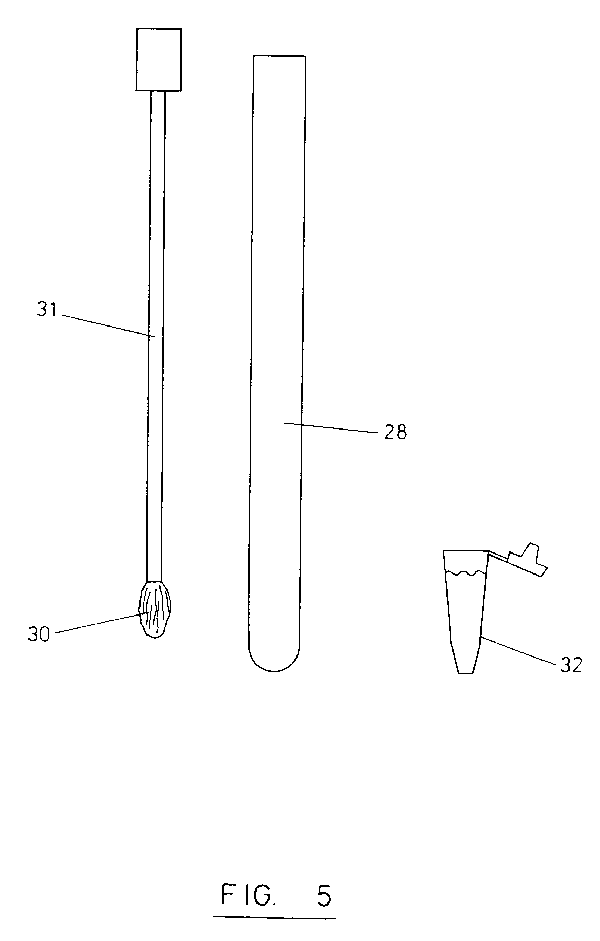

The cylinder 17 has a member 23 slidably mounted in it, as shown in Figure 3. Member 23 is a transparent tube, closed at its lower end, and having a skirt 24 depending from its top and extending around it. The member 23 is biassed upwards by a compression spring (not shown). When the member 23 is depressed against the bias of its spring, the lower edge of the skirt 24 bears against a projecting pin 26 on the shutter 22 to pivot the latter about point 25 to its open position (Figure 4).

The luminometer casing 10 houses a pack of rechargeable batteries against its bottom wall and above this a main circuit board is mounted. The liquid crystal display is mounted on a further circuit board above the main circuit board.

In use to measure the light output of a sample, the sample swab is inserted into an elongate plastics sample tube 28 as will be described below. This sample tube 28 is then inserted into the elongate chamber 15 of the section 14, so that its lower end is received by the tubular slidable member 23 in the cylinder 17. Then the cap 16 is pivoted up to an in-line position over the top of the elongate chamber 15, and is then pressed down to a position in which it detents: during this movement, the cap 16 bears on the top of the sample tube 28 to press the latter downwards, and in so doing depressing the tubular member 23 against its spring bias, and in turn opening the shutter 22. In its detented position, the cap 16 closes the top of the elongate chamber 15 in light-tight manner, and also operates a switch, preferably a micro-switch to enable the electronic circuit of the monitor.

Now the user starts the luminometer, using the touch-sensitive panel 13, and the light output received by the photomultiplier, in a predetermined period of time, is measured and displayed as a numerical count. The luminometer will not start unless it is enabled by closure of the switch by the cap.

In order to prepare a sample, a swab as shown in Figure 5 is used: the swab 30 is in the form of an absorbent bud on the end of an elongate stalk 31. The swab 30 has been pre-moistened by dipping into an appropriate swabbing solution (ATP breakage reagent), and then stored in an elongate tube. The swab 30 is wiped back-and-forth over e.g. a work-surface to be tested, at the same time turning the stalk 3 so that the whole periphery of the swab 30 will come into contact with the work-surface. During the swabbing, the ATP is released from cellular material picked up from the surface being wiped. The swab is then dipped into a small tube 32 containing enzyme solution so that light is emitted. The swab is then put back into the sample tube 28, which is then introduced into the instrument to measure the light output.

Preferably the luminometer is used in a kit which comprises a carrying case for housing the instrument, a plurality of swabs in their protective tubes 28, a plurality of enzyme-containing tubes 32 and a stand for holding the latter tubes. The swab stalk has a plug at its upper end to seal into the top of the tube 28, and the enzyme-containing tube 28 is formed with an integral plug. In use of this kit, the swabs may be pre-moistened and stored in their protective tubes and the tubes filled with enzyme, all at a central laboratory, to enable easy use of the kit in the field, and has the benefit of being "food factory safe" as the kit does not contain any glass or wooden parts which would be hazardous in such environments.

## Claims

1. A method of testing for the presence of cellular material by means of bioluminescent light emission, comprising wiping a swab (30), pre-moistened with breakage reagent, over a surface to be tested, contacting said swab (30) with enzyme solution such that if the swab sample has picked up cells, light is now emitted, then measuring the light output directly from the swab (30).

2. A method as claimed in claim 1, in which the pre-moistened swab (30) is enclosed and stored in a protective tube (28) prior to use.

3. A method as claimed in claim 2, in which the swab (30) is dipped into the enzyme solution for a predetermined time and then returned to its protective tube (28).

4. A method as claimed in claim 3, in which said protective tube (28) is transparent and is next introduced into a monitor to measure the light emitted from the swab sample.

## Patentansprüche

1. Prüfverfahren für das Vorhandensein von zellularem Material mittels biolumineszenter Lichtemission umfassend: Wischen eines mit Abspalt-Reagens (breakage reagent) vorbefeuchteten Tupfers (30) über eine zu testende Oberfläche, in Berührung bringen des Tupfers (30) mit Enzymlösung, so daß, falls die Tupferprobe Zellen aufgenommen hat, nun Licht ausgestrahlt wird, und anschließendes Messen des Lichtausgangs direkt von dem Tupfer (30).

2. Verfahren nach Anspruch 1, bei dem der vorbefeuchtete Tupfer (30) vor der Benutzung in einer Schutzröhre (28) eingeschlossen aufbewahrt wird.

3. Verfahren nach Anspruch 2, bei dem der Tupfer (30) in die Enzymlösung über eine vorbestimmte Zeit eingetaucht und anschließend in seine Schutzröhre (28) zurückgebracht wird.

4. Verfahren nach Anspruch 3, bei dem die Schutzröhre (28) transparent ist und anschließend in einen Monitor eingegeben wird, um das von der Tupferprobe ausgehende Licht zu messen.

## Revendications

1. Méthode de contrôle de la présence de matériau cellulaire au moyen de l'émission lumineuse de bioluminescence, comprenant le passage d'un tampon d'ouate (30), humidifié au préalable à l'aide d'un réactif de dégradation, sur une surface à contrôler, la mise en contact dudit tampon d'ouate (30) avec une solution d'enzymes, de manière à ce que, si l'échantillon de tampon d'ouate a recueilli des cellules, il y ait maintenant émission de lumière, enfin la mesure de l'émission de lumière venant directement du tampon d'ouate (30).

2. Méthode selon la revendication 1, dans laquelle le tampon d'ouate (30) humidifié au préalable est enfermé et stocké dans un tube protecteur (28) avant utilisation.

3. Méthode selon la revendication 2, dans laquelle le tampon d'ouate (30) est plongé dans la solution d'enzymes pendant une période de temps prédéterminée et est alors replacé dans son tube protecteur (28).

4. Méthode selon la revendication 3, dans laquelle ledit tube protecteur (28) est transparent et est ensuite introduit dans un instrument de contrôle pour mesurer la lumière émise en provenance de l'échantillon de tampon d'ouate.
